# EUROPEAN PATENT APPLICATION

(11) **EP 4 838 316 A1**
(43) Date of publication of application: **11.11.2026**
(21) Application number: 26172472.8
(22) Date of filing: 15.04.2026
(51) Int. Cl.: G05B 15/02

(54) **METHOD AND SYSTEM FOR EXPORTING POINTS OF A BUILDING AUTOMATION SYSTEM USING EMBEDDED EXTENSION FUNCTIONS**

(30) Priority: 05.05.2025 US 202519198787
(71) Applicant: Honeywell International Inc., Charlotte, NC 28202 (US)
(72) Inventor: GOEDE, Arent Johan, Charlotte, 28202 (US); CONDE MARTIN, Carlos Ivan, Charlotte, 28202 (US); VANDENBOSCH, Filip, Charlotte, 28202 (US); SPITHOVEN, Theodorus Maria, Charlotte, 28202 (US); LAIBACHER, Walfried, Charlotte, 28202 (US)
(74) Representative: Haseltine Lake Kempner LLP

(57) **Abstract**

A method and system for making points from building automation system components available to external systems via a predetermined communication protocol. Export extension instances are assigned to points of components of the building automation system. The export extensions express point parameter values as executable functions. When executed, the executable functions build text strings that are used for the respective point parameter value. The export extensions automatically provide point table entries to a centralized export table, making their points and their parameter values accessible to external systems.

## Description

### TECHNICAL FIELD

The present disclosure relates generally to building automation systems, and more particularly to automatically exporting points using extension functions.

### BACKGROUND

Building automation systems typically include a large number of individual components that each have one or more associated points. Building automation systems are often represented in a software framework, such as the Niagara^{™} or other framework, to facilitate configuration, communication and/or control of the various components of the building automation system. Configuring the software framework to export particular points from each component to a centralized export table can be a time-consuming and error-prone process, as there can be a substantial amount of information for each point that needs to be manually entered and/or assigned. What would be desirable are methods and systems for automatically exporting particular points from selected components of a building automation system to a centralized export table requiring little or no manual intervention.

### SUMMARY

The present disclosure relates generally to building automation systems, and more particularly to automatically exporting points using one or more extension functions. An example may be found in a method for making available to an external system one or more points from each of a plurality of components of a building automation system via a predetermined communication protocol. The plurality of components of the building automation system are represented in a software framework. The method includes, for at least some of the plurality of components of the building automation system, assigning an export extension instance to each of one or more points of the respective component. At least one export extension instance is configured to express one or more exportable point parameter values of the respective point as a respective executable function that when executed is programmed to build a text string that is included in the respective exportable point parameter value using information identified and retrieved by the respective executable function from the software framework. Each of the export extension instances provide a point table entry to a centralized export table in a format that is compatible with the predetermined communication protocol, with each point table entry making available the respective point including one or more exportable point parameter values of the respective point to the external system via the predetermined communication protocol. During use, the external system accesses the centralized export table to retrieve one or more of the points including one or more exportable point parameter values of the respective point.

Another example may be found in a system. The illustrative system includes a plurality of components each having one or more points, and a controller that is operatively coupled to the plurality of components. The controller may host a software framework that represents a building management system including the plurality of components. The controller is configured to assign an export extension instance to each of one or more points of the respective component for at least some of the plurality of components in the software framework. At least one of the export extension instances express one or more exportable point parameter values of the respective point as a respective executable function that when executed automatically calculates and fills in at least part of the respective exportable point parameter value. The controller is configured to execute one or more of the executable function of one or more of the export extension instances to automatically calculate and fill in at least part of the respective exportable point parameter value. The controller is configured to provide a point table entry to an export table that is compatible with a predetermined communication protocol. Each point table entry makes available the respective point, including one or more exportable point parameter values of the respective point, to an external system via the predetermined communication protocol.

Another example may be found in a non-transitory computer readable medium storing instructions. When the instructions are executed by one or more processors, the one or more processors are caused to, for at least some of a plurality of components of a building automation system, assign an export extension instance to each of one or more points of the respective component, wherein each export extension instance is configured to express one or more exportable point parameter values of the respective point as an executable function that when executed automatically calculates and fills at least part of the respective exportable point parameter value. Each of the export extension instances is configured to provide a point table entry to an export table, where each point table entry makes available the respective point including one or more exportable point parameter values of the respective point to an external system via a predetermined communication protocol.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing a prior art system for exporting points via a centralized exporter table;
Figure 2 is a screen shot showing an example prior art building automation software framework that includes a VAV (Variable Air Volume) component;
Figure 3 is a screen shot showing an example prior art dialog box that may be displayed for a single selected point of the VAV component of Figure 2;
Figure 4 is an enlarged view of the export dialog box of Figure 3;
Figure 5 is a screen shot showing a listing of manually defined points that are included in the centralized export table;
Figure 6 is a schematic block diagram showing an improved system for automatically generating point entries in a centralized export table;
Figure 7 is a schematic block diagram showing an illustrative system architecture;
Figure 8 is a flow diagram showing an illustrative method for making available one or more points from each of a plurality of components of a building automation system to an external system;
Figure 9 is a flow diagram showing an illustrative series of steps that may be carried out by one or more processors that are executing instructions stored on a non-transitory computer-readable storage medium;
Figure 10 is a screen shot showing point extensions added to a VAV component of a software framework of a building automation system; and
Figure 11 is a screen shot showing a centralized export table with export table entries that are automatically generated by the point extensions added to the various components of the building automation system.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

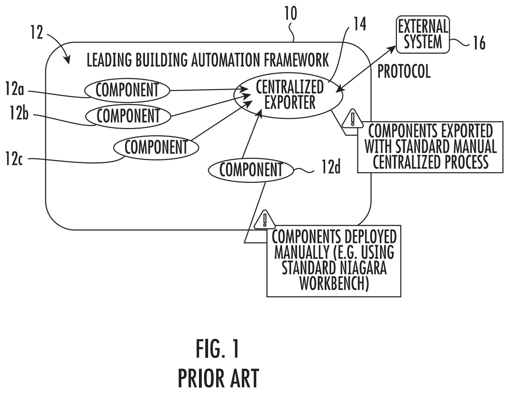

Figure 1 is a schematic block diagram showing a prior art system for exporting points via a centralized exporter table. A building automation software framework 10 is shown including a number of components 12, individually labeled as 12a, 12b, 12c, and 12d. While a total of four components 12 are shown, it will be appreciated that this is merely illustrative, as the building automation software framework 10 may include any number of components 12, and in some cases may include considerably more than four components 12. In this document, the term "point" can refer to any information of a Building Automation System (BMS). For example, "points" can refer to parameter values, operating states, historical data, alarms, schedules and the like. The building automation software framework 10 can reference a plurality of "components" 12. As used herein, the term "component" can refer to modeling components of the building automation software framework 10 and not necessarily only to physical components of the corresponding Building Automation System (BMS). In some cases, a point can be considered one of the modeling components of the building automation software framework 10.

In this prior art example, each of the components 12 and/or points are configured and deployed manually to the centralized exporter 14. As an example, each of the components 12 and/or points may be manually configured and deployed using the Niagara^{®} software framework (e.g. Niagara^{®} Workbench). While the Niagara^{®} software framework is used as an example, it is contemplated that any suitable software framework may be used. The centralized exporter 14 includes a centralized exporter table that is configured to export certain points to an external system 16 via a designated communication protocol (e.g. BACnet, Modbus, etc.). The external system 16 may be a cloud-based server, a personal computer, remote controller or any other suitable external system. Manually configuring, deploying and exporting each of the components 12 and/or points to the centralized exporter 14 can be time-consuming and error-prone.

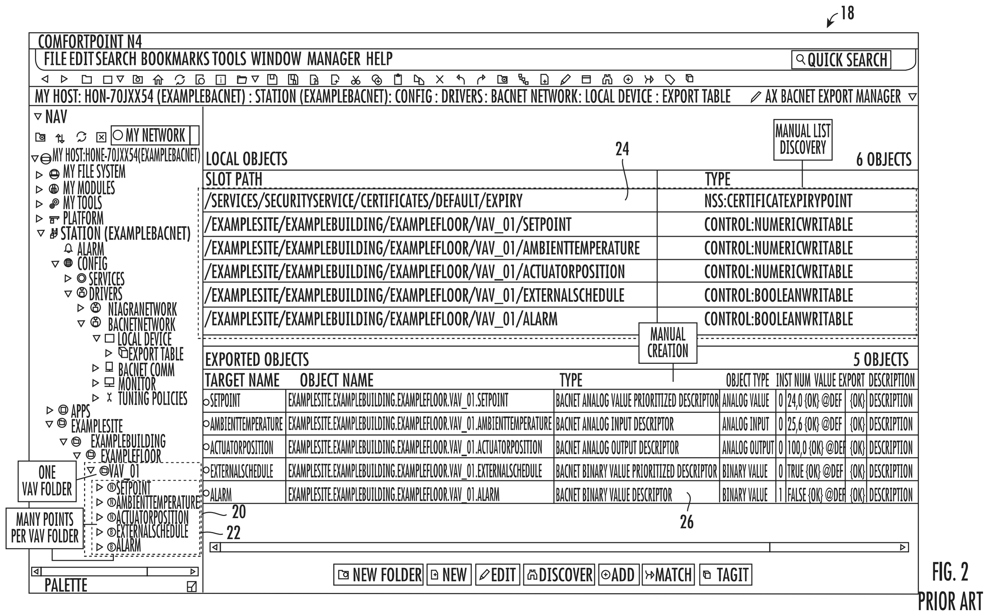

Figure 2 is a screen shot showing an example prior art building automation software framework 10 that includes a VAV (Variable Air Volume) component. The screen shot 18 includes a box 20 that is drawn around a single VAV component. Inside box 20 is a box 22 that is drawn around several points of the VAV component. The screen shot shows a point discovery section 24 and a centralized export table section 26. As used herein, the phrase "centralized export table" can refer to any suitable local device point list. A lot of information is involved in exporting a single point of, for example the VAV component, to the export table section 26, all of which must usually be manually created and/or entered by the user through various menus of the Niagara^{®} software framework.

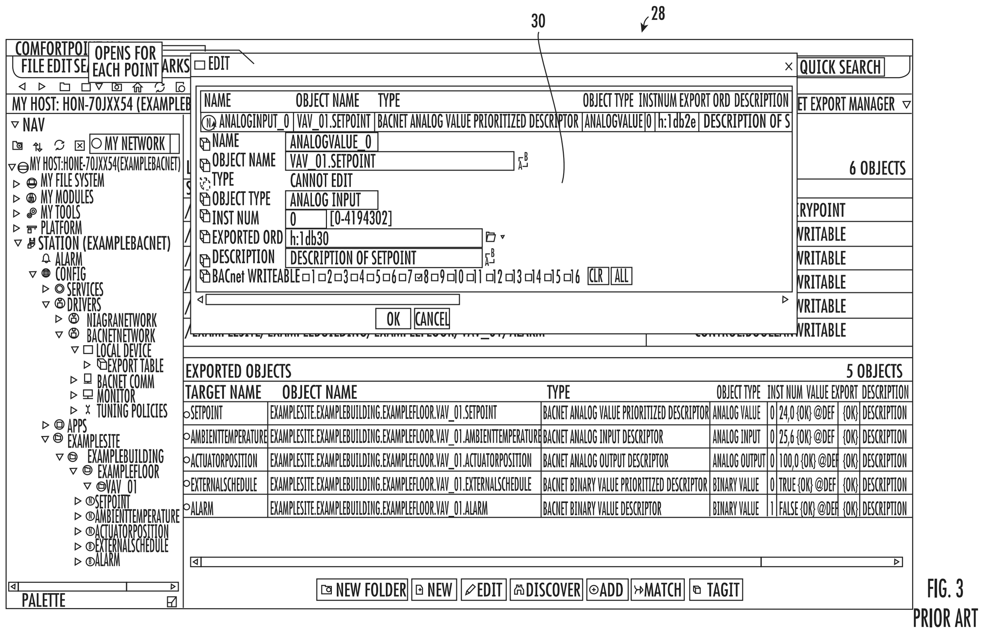

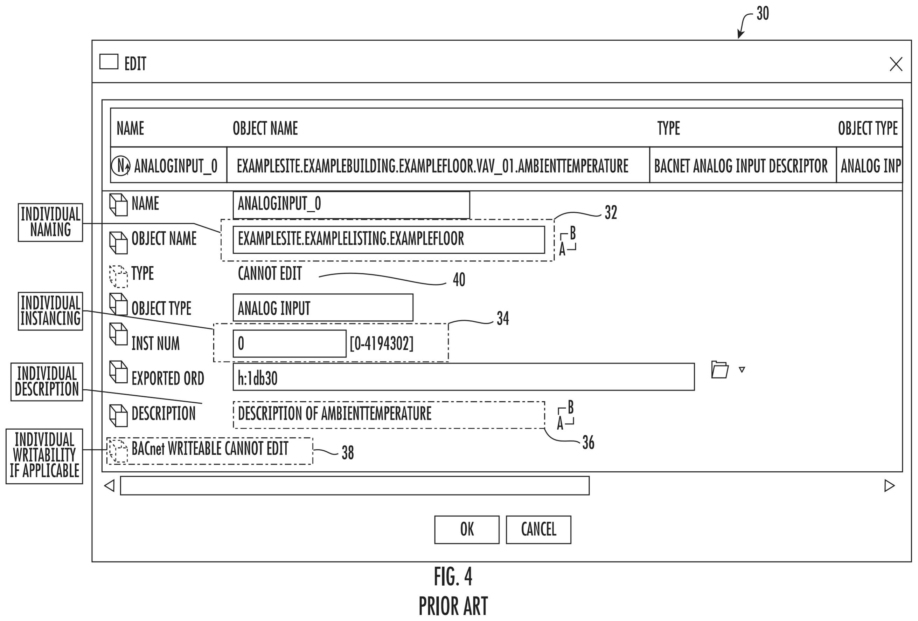

Figure 3 is a screen shot showing an example prior art dialog box that may be displayed for a single selected point of the VAV component of Figure 2. The screen shot 28 includes a dialog box 30 that opens for each point or a selected set of points. In some cases, a single VAV may have as many as twenty points. An example facility may include five hundred VAV units. This can mean as many as ten thousand dialog boxes 30 may need to be opened to configure just the VAV units in a facility. As can be seen, each export dialog box 30 has a number of parameters that can be manually customized. Figure 4 is an enlarged view of the export dialog box of Figure 3. The dialog box 30 may be used to manually define certain parameters for the respective point to make the point suitable for use in the centralized export table. Some of the information that can be manually entered includes an object name 32 for individual naming, Inst Num 34 for individual instancing, description 36 for individual description, and BACnet writability 38 for individual writability. The export dialog box 30 includes additional information as well. It can be seen that configuring a VAV unit and its respective points manually may involve a lot of manual data entry. The point that are to be exported are manually added by the user to the centralized export table section 26 (see Figure 2).

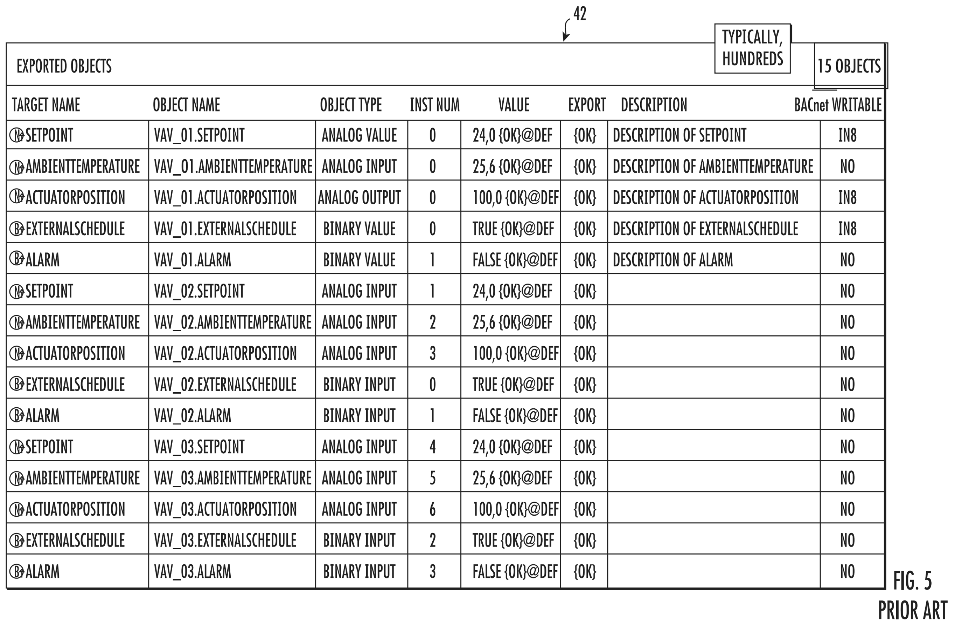

Figure 5 is a screen shot 42 showing a listing of manually defined points that are included in the centralized export table. As can be seen, this can represent an incredible amount of data that needs to be manually entered and checked. While the screen shot 42 shows fifteen objects, this may typically number in the hundreds. In some cases, there may be as many as eight thousand or more entries. As can be seen, the prior art methodology requires an incredible amount of manual data entry, which can be very time consuming and error prone.

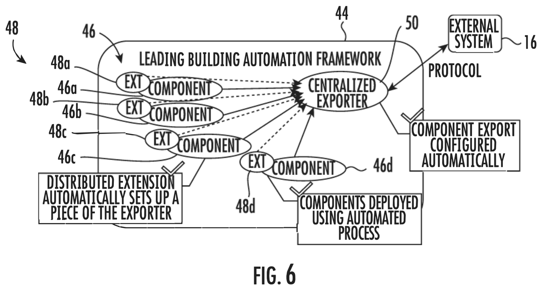

Figure 6 is a schematic block diagram showing an improved system for automatically generating point entries in a centralized export table. The illustrative building automation software framework 44 includes a number of components 46, individually labeled as 46a, 46b, 46c, and 46d. The components 46 may be considered as representing the components 12 (Figure 1). While a total of four components 46 are shown, it will be appreciated that this is merely illustrative, as the building automation software framework 44 may include any number of components 46, and in some cases may include considerably more than four components 46. As detailed here, the term "component" can refer to modeling components of the building automation software framework 10 and not necessarily only to physical components of the corresponding Building Automation System (BMS). In some cases, a point can be considered one of the modeling components of the building automation software framework 10.

In the example shown, each of the components 46 include one or more "Ext" (extension) 48, individually labeled as 48a, 48b, 48c, and 48d. The extensions 48 may be automatically generated for each component. In some cases, generating the extensions 48 may include the use of predefined templates each tailored to one of a plurality of component types and/or points. The extensions 48 are configured to automatically generate an export table entry for the corresponding component and/or point in the centralized export table of the centralized exporter 50. That is, the centralized export table of the centralized exporter 50 may be automatically populated by the extensions that are automatically (or manually) installed in at least some of the components 46.

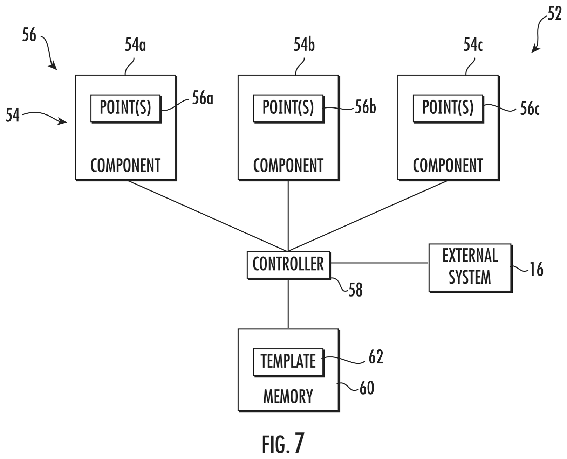

Figure 7 is a schematic block diagram showing an illustrative system 52. The system 52 includes a plurality of components 54, individually labeled as 54a, 54b, and 54c. While a total of three components 54 are shown, it will be appreciated that the system 52 may include considerably more than three components 54. In the example shown, each of the components 54 includes one or more points 56, individually labeled as 56a, 56b, and 56c. A controller 58 is operatively coupled to the plurality of components 54. The controller 58 is coupled with the external system 16.

The controller 58 is configured to assign an export extension instance to each of one or more points of the respective component 54 for at least some of the plurality of components 54, wherein at least one of the export extension instances expresses one or more exportable point parameter values of the respective point as a respective executable function that when executed automatically calculates and fills in at least part of the respective exportable point parameter value. In some cases, this may include automatically calculating and including an instance number and/or other suitable parameter in the port export parameter value. In some cases, the port export parameter value may not be a native point parameter value of the building automation software framework 10, but rather may be a port parameter value that is generated by the export extension just for export (e.g. a human understandable name or description of the point).

The controller 58 is configured to execute one or more of the executable functions of one or more of the export extension instances to automatically calculate and fill in at least part of the respective exportable point parameter value. The controller 58 is configured to provide a point table entry to an export table that is compatible with a predetermined communication protocol (e.g. BACnet, Modbus, etc.). Each point table entry may make available the respective point including one or more exportable point parameter values of the respective point to an external system 16 via the predetermined communication protocol. In some cases, the external system 16 may be configured to access the export table via the predetermined communication protocol to retrieve one or more of the points including one or more exportable point parameter values of the respective point.

In some cases, the executable function includes one or more relative paths in a hierarchical software framework of at least part of the system 52, that when executed, resolve to a text string that is included when automatically calculating and filling in the at least part of the respective exportable point parameter value. In some cases, the respective exportable point parameter value for at least one of the respective points may correspond to a point name for the respective point, and wherein another exportable point parameter value of the respective point represents a data value. In some cases, the respective exportable point parameter value for at least one of the respective points may correspond to a description of the respective point. In some cases, the respective exportable point parameter value for at least one of the respective points may correspond to a data type of the respective point. These are just examples.

While not required, the illustrative system 52 may include a memory 60 for storing a template 62 for each of a plurality of component types. Each of the templates 62 includes one or more predefined export extension instances assigned to each of one or more components of the respective component type (e.g. points). In some cases, the controller 58 may be configured to use the template 62 to assign the export extension instances to each of at least some of the plurality of components 54.

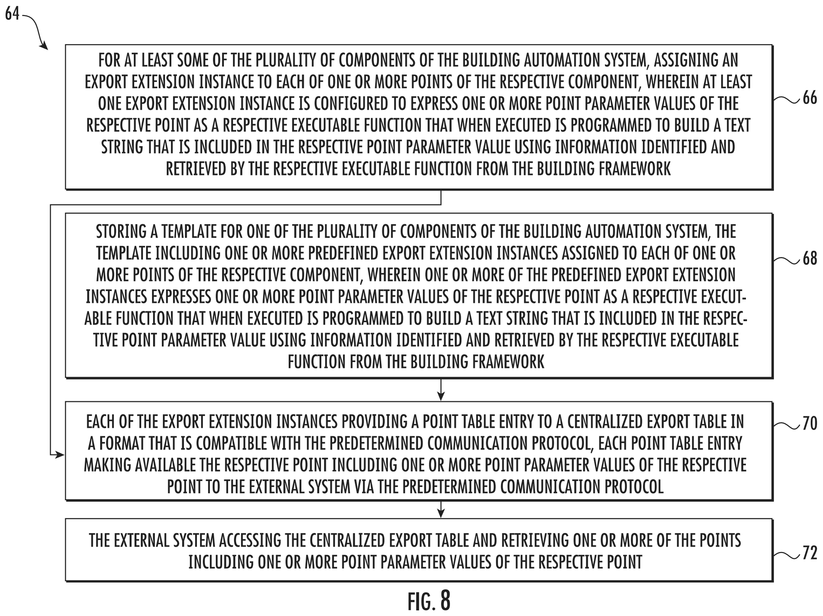

Figure 8 is a flow diagram showing an illustrative method 64 for making available to an external system (such as the external system 16) one or more points from each of a plurality of components of a building automation system (such as the components 54) via a predetermined communication protocol. The plurality of components (including points) of the building automation system being represented in a software framework. In some cases, for at least some of the plurality of components of the building automation system, an export extension instance is assigned to each of one or more points of the respective component, wherein at least one export extension instance is configured to express one or more exportable point parameter values of the respective point as a respective executable function that when executed is programmed to build a text string that is included in the respective exportable point parameter value using information identified and retrieved by the respective executable function from the software framework of the building automation system, as indicated at block 66. In some cases, the text string that is included in the respective exportable point parameter value may correspond to a point name of the respective point. In some cases, the text string that is included in the respective exportable point parameter value may correspond to a point name for the respective point, and wherein another exportable point parameter value of the respective point may represent a data value. In some cases, the text string that is included in the respective exportable point parameter value may correspond to a description of the respective point. In some cases, the text string that is included in the respective exportable point parameter value may correspond to a data type of the respective point. These are just examples.

Alternatively, or in addition, the method 64 may include storing a template for each of one or more of the plurality of components of the building automation system, the template including one or more predefined export extension instances assigned to each of one or more points of the respective component. The one or more of the predefined export extension instances express one or more exportable point parameter values of the respective point as a respective executable function that when executed is programmed to build a text string that is included in the respective exportable point parameter value using information identified and retrieved by the respective executable function from the software framework, as indicated at block 68. In some cases, the software framework of the building automation system may be a hierarchical software framework. The executable function for one or more exportable point parameter values may include one or more relative paths within the hierarchical software framework of the building automation system that when executed resolve to a text string that is included in the respective exportable point parameter value.

As indicated at block 70, each of the export extension instances are configured to provide a point table entry to a centralized export table in a format that is compatible with a predetermined communication protocol. Each point table entry may make available the respective point including one or more exportable point parameter values of the respective point to the external system via the predetermined communication protocol. In some cases, one or more exportable point parameter values may include an instance number, and one or more of the export extension instances may automatically calculate the instance number of the respective exportable point parameter value. The external system accesses the centralized export table to retrieves one or more of the points including one or more exportable point parameter values of the respective point, as indicated at block 72.

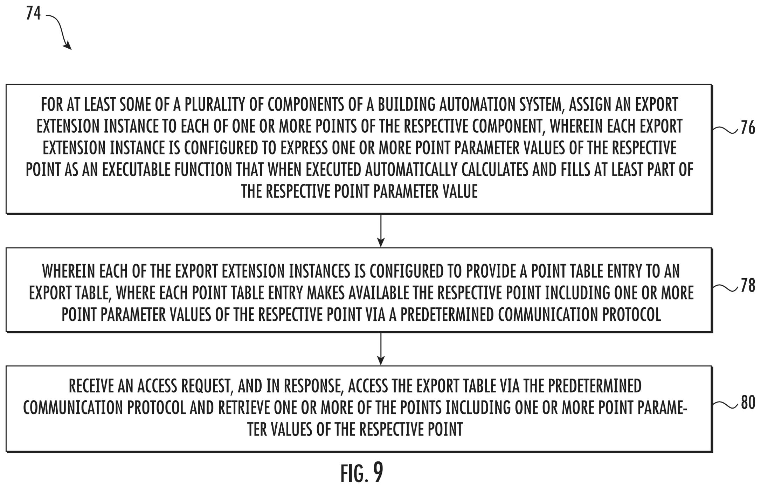

Figure 9 is a flow diagram showing an illustrative number of steps 74 that may be carried out by one or more processors when the one or more processors are executing instructions that are stored on a non-transitory computer-readable storage medium. As an example, the one or more processors may be part of the controller 58 (Figure 7). The one or more processors are caused to, for at least some of a plurality of components of a building automation system, assign an export extension instance to each of one or more points of the respective component, wherein each export extension instance is configured to express one or more exportable point parameter values of the respective point as an executable function that when executed automatically calculates and fills at least part of the respective exportable point parameter value, as indicated at block 76. In some cases, the executable function may be programmed to cause the one or more processors to build a text string that is included when automatically calculating and filling at least part of the respective exportable point parameter value. The text string that is included in the respective exportable point parameter value when automatically calculating and filling in the at least part of the respective exportable point parameter value may correspond to a point name for the respective point, and wherein another exportable point parameter value of the respective point represents a data value. Each of the export extension instances is configured to provide a point table entry to an export table, where each point table entry makes available the respective point including one or more exportable point parameter values of the respective point to an external system via a predetermined communication protocol, as indicated at block 78. In some cases, the one or more processors may be caused to receive an access request, and in response, access the export table via the predetermined communication protocol and retrieve one or more of the points including one or more exportable point parameter values of the respective point, as indicated at block 80.

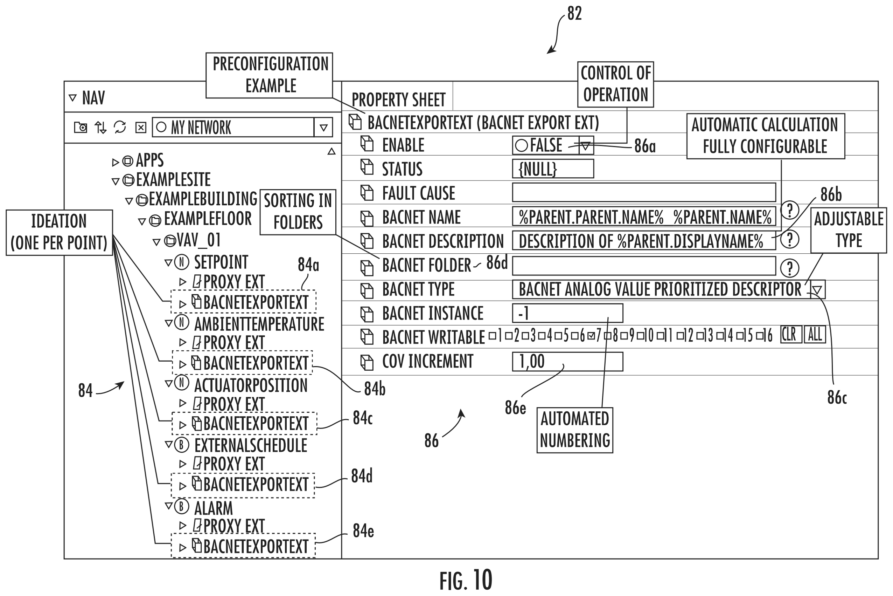

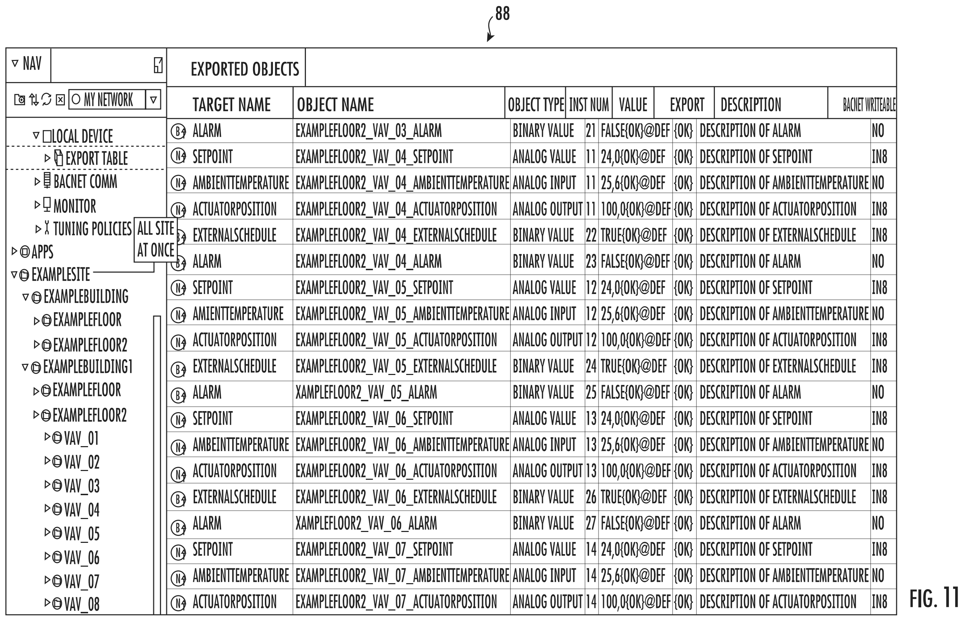

Figure 10 is a screen shot 82 showing an example of adding extensions for a VAV unit. As seen at section 84, there is a single extension per point of the component VAV_01, individually labeled as 84a, 84b, 84c, 84d, and 84e. Section 86 shows a control of operation 86a parameter, a fully configurable automatically calculated description 86b, an adjustable type 86c (in comparison to the non-adjustable type shown in the prior art screen shots), a folder 86d for sorting, and automated numbering 86e. A given extension assigned to a particular point will automatically calculate the various values based on a given pre-configuration. For example, the "BACnet Name" parameter in Figure 10 is coded as "%parent.parent,name%_%parent.name%". This, when executed, is resolve to the name of the grandparent object in the hierarchical software framework (e.g. ExampleFloor) followed by an underscore "_", followed by the parent object name in the hierarchical software framework (e.g. VAV_01), resulting in "ExampleFloor _VAV_01". This is just an example. Figure 11 is a screen shot 88 showing an example automated export table for VAV units of a building automation system. The entire site can be configured at once, saving considerable effort and time, and in a much more accurate and error-free manner. In some cases, the export table may be exported in an Excel format, manipulated by a user using MS Excel functionality, and then re-imported. This may provide additional flexibility in configuring the centralized export table.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for making available to an external system one or more points from each of a plurality of components of a building automation system via a predetermined communication protocol, the plurality of components of the building automation system being represented in a software framework, the method comprising:
for at least some of the plurality of components of the building automation system, assigning an export extension instance to each of one or more points of the respective component, wherein at least one export extension instance is configured to express one or more exportable point parameter values of the respective point as a respective executable function that when executed is programmed to build a text string that is included in the respective exportable point parameter value using information identified and retrieved by the respective executable function from the software framework;
each of the export extension instances providing a point table entry to a centralized export table in a format that is compatible with the predetermined communication protocol, each point table entry making available the respective point including one or more exportable point parameter values of the respective point to the external system via the predetermined communication protocol; and
the external system accessing the centralized export table to retrieve one or more of the points including one or more exportable point parameter values of the respective point.

2. The method of claim 1, wherein the text string that is included in the respective exportable point parameter value corresponds to a point name for the respective point; and, optionally,
wherein another exportable point parameter value of the respective point represents a data value.

3. The method of claim 1, wherein the text string that is included in the respective exportable point parameter value corresponds to a description of the respective point.

4. The method of claim 1, wherein the text string that is included in the respective exportable point parameter value corresponds to a data type of the respective point.

5. The method of any preceding claim, wherein one or more exportable point parameter values includes an instance number, and one or more of the export extension instances automatically calculating the instance number of the respective exportable point parameter value.

6. The method of any preceding claim, further comprising storing a template for one of the plurality of components of the building automation system, the template including one or more predefined export extension instances assigned to each of one or more points of the respective component, wherein one or more of the predefined export extension instances expresses one or more exportable point parameter values of the respective point as a respective executable function that when executed is programmed to build a text string that is included in the respective exportable point parameter value using information identified and retrieved by the respective executable function from the software framework.

7. The method of any preceding claim, wherein the software framework of the building automation system is a hierarchical software framework, and wherein the executable function for one or more exportable point parameter values includes one or more relative paths within the hierarchical software framework of the building automation system that when executed resolve to a text string that is included in the respective exportable point parameter value.

8. A system comprising:
a plurality of components each having one or more points;
a controller operatively coupled to the plurality of components, the controller configured to:
assign an export extension instance to each of one or more points of the respective component for at least some of the plurality of components, wherein at least one of the export extension instances expresses one or more exportable point parameter values of the respective point as a respective executable function that when executed automatically calculates and fills in at least part of the respective exportable point parameter value;
execute one or more of the executable function of one or more of the export extension instances to automatically calculate and fill in at least part of the respective exportable point parameter value; and
provide a point table entry to an export table that is compatible with a predetermined communication protocol, each point table entry making available the respective point including one or more exportable point parameter values of the respective point via the predetermined communication protocol.

9. The system of claim 8, further comprising an external system, wherein the external system is configured to access the export table via the predetermined communication protocol and retrieve one or more of the points including one or more exportable point parameter values of the respective point.

10. The system of either of claims 8 or 9, wherein the executable function includes one or more relative paths in a hierarchical framework of at least part of the system that when executed resolve to a text string that is included when automatically calculating and filling in the at least part of the respective exportable point parameter value.

11. The system of any of claims 8-10, wherein the respective exportable point parameter value for at least one of the respective points corresponds to a point name for the respective point, and, optionally,
wherein another exportable point parameter value of the respective point represents a data value.

12. The system of any of claims 8-10, wherein the respective exportable point parameter value for at least one of the respective points corresponds to one of:
a description of the respective point; and/or
a data type of the respective point.

13. The system of any of claims 8-12, wherein automatically calculating and filling in the at least part of the respective exportable point parameter value includes automatically calculating and including an instance number.

14. The system of any of claims 8-13, further comprising:
a memory for storing a template for each of one or more of the plurality of components, each template including one or more predefined export extension instances assigned to each of one or more points of the respective component; and
the controller using the template to assign the export extension instances to each of at least some of the plurality of components.

15. A non-transitory computer readable medium storing instructions that when executed by one or more processors cause the one or more processors to:
for at least some of a plurality of components of a building automation system, assign an export extension instance to each of one or more points of the respective component, wherein each export extension instance is configured to express one or more exportable point parameter values of the respective point as an executable function that when executed automatically calculates and fills at least part of the respective exportable point parameter value; and
wherein each of the export extension instances is configured to provide a point table entry to an export table, where each point table entry makes available the respective point including one or more exportable point parameter values of the respective point via a predetermined communication protocol.
